(19) Europäisches Patentamt

European Patent Office

Office européen des brevets

(11) **EP 1 477 236 B1**

(12) **EUROPEAN PATENT SPECIFICATION**

(45) Date of publication and mention
of the grant of the patent:
**11.01.2006  Bulletin 2006/02**

(51) Int Cl.:
***B05D 7/00*** *(2006.01)*

(21) Application number: **04252826.5**

(22) Date of filing: **14.05.2004**

(54) **Three-Coat one-bake film forming method**

Dreischicht-Beschichtungsverfahren mit einem Einbrennvorgang

Méthode de revêtement à trois couches et une cuisson

(84) Designated Contracting States:
**DE ES FR GB**

(30) Priority: **15.05.2003  JP 2003137626**

(43) Date of publication of application:
**17.11.2004  Bulletin 2004/47**

(73) Proprietors:
• **Mazda Motor Corporation**
**Aki-gun**
**Hiroshima-ken (JP)**
• **Nippon Paint Co., Ltd.**
**Osaka-shi**
**Osaka-fu (JP)**

(72) Inventors:
• **Yamane, Takakazu, c/o Mazda Motor Corporation**
**Aki-gun**
**Hiroshima-ken (JP)**
• **Shigenaga, Tsutomu, c/o Mazda Motor**
**Corporation**
**Aki-gun**
**Hiroshima-ken (JP)**
• **Watanabe, Masakazu**
**Hiroshima-shi**
**Hiroshima-ken (JP)**
• **Kakii, Takuhiro**
**Toyota-gun**
**Hiroshima-ken (JP)**

(74) Representative: **Perry, Robert Edward**
**GILL JENNINGS & EVERY**
**Broadgate House**
**7 Eldon Street**
**London EC2M 7LH (GB)**

(56) References cited:
WO-A-94/27741          US-A- 4 598 111
US-B1- 6 180 181

• **PATENT ABSTRACTS OF JAPAN vol. 0186, no.
56 (C-1286), 13 December 1994 (1994-12-13) & JP
6 256714 A (KANSAI PAINT CO LTD), 13
September 1994 (1994-09-13)**

**Description**

FIELD OF THE INVENTION

The present invention relates to a method for forming a coated composite film which is to be formed on a body of an automobile and the like.

BACKGROUND OF THE INVENTION

For forming a coated composite film of an automobile, there are two methods, of which one is a method for baking and curing every formed coated film, and the other is a method for simultaneously curing plural coated composite films. For example, formation of a metallic coated film by two-coat one-bake method wherein metallic base coating film and clear coating film are simultaneously cure or baked is generally performed. In addition, JP-A No.11-114489 proposes a formation of a coated composite film by three-coat one-bake method which comprises successively forming a color base coating film, a metallic base coating film and a clear coating film, and then baking and curing the three layers at the same time in order to enhance film appearance.

It is known that peeling of a coated composite film occurs in some cases by so-called "chipping" in which a running vehicle snaps up pebbles and the pebbles collide with a coated film. The conventional method for forming a coated composite film comprises a step of forming an intermediate coating film, and then curing this intermediate coating film once. Therefore, strategies for chipping defects can be taken either by forming a specific intermediate coating film having the anti-chipping property, or forming an intermediate coating film which adjusts brightness with a base coating film to make chipping unrecognizable.

For example, in JP-A No.6-256714 or JP-A No.6-254482, improvement in anti-chipping property has been studied from a viewpoint of a composition of an intermediate paint, but appearance and performance are insufficient in the method for baking and curing three layers at the same time.

In addition, when the two-layered or three-layered coated composite film is formed by wet-on-wet manner, a baking and drying oven for intermediate coating can be omitted, and great effects are expected from a viewpoint of economical and environmental properties. However, when a whole surface of a body of an automobile having many concavities and convexities is coated in a wet-on-wet manner, deteriorated appearance, such as popping and miscibility; occurs in some portion of surface.

In particular, in case where a low solvent-type paint having a low viscosity is used, there is a problem that when a base coating film is coated on an uncured intermediate coating film, both paints are mixed at an interface therebetween (generally referred to as "phase mixing"), and a color of a coating film is easily clouded.

OBJECT OF THE INVENTION

An object of the present invention is to provide a method for forming a laminated coating film, which controls miscibility and inversion at an interface between respective coating film layers when an intermediate coating paint and a topcoating paint, in particular, a topcoating paint containing a base paint and a clear paint are successively coated on a substrate in a wet-on-wet manner, and decrease peeling on the elecrocoated film surface caused by chipping, and a size of a peeled area.

In order to prevent layer mixing of an intermediate coating and a base coating, it is effective to (i) increase a viscosity of an intermediate coating and (ii) increase a difference in solubility parameters between base coating and intermediate coating. Then, the present inventors tried to exploit an interface controlling resin which can increase a viscosity and a difference in solubility parameters by migrating to the surface of an intermediate coating after coating.

**SUMMARY OF THE INVENTION**

The present invention provides a method for forming a coated film, which comprises a step of successively coating, on an elecrocoated film formed on a substrate, an intermediate paint, a base paint and a clear paint formed thereon, and a step.of baking and curing the coated three-layers at the same time, wherein
the intermediate paint comprises:

(a) 40 to 56 % by weight of a urethane-modified polyester resin having a number average molecular weight of 1,500 to 3,000, obtained by reacting an aliphatic isocyanate compound with a hydroxyl group-containing polyester resin having a glass transition point (Tg) of 40 to 80 °C, the polyester being obtained by polycondensation of an acid component containing 80 mol% or more of isophathalic acid and a polyhydric alcohol;
(b) 10 to 30% by weight of a melamine resin;

(c) 15 to 30% by weight of an isocyanate compound blocked with a compound having an active methylene group, the isocyanate compound being obtained by reacting hexamethylene diisocyanate, and a compound reacting with hexamethylene diisocyanate;

(d) 4 to 15% by weight of a non-aqueous dispersion resin having a core-shell structure, wherein the shell portion is composed of an acrylic resin obtained by copolymerization of an $\alpha,\beta$-ethylenic unsaturated monomer mixture, a solubility parameter (SP value) of the $\alpha,\beta$-ethylenic unsaturated monomer mixture is not smaller than 8.5 and not larger than 12.0, and a number average molecular weight of the acrylic resin is 1,000 to 20,000, the core portion is composed of an acrylic resin obtained by copolymerization of an $\alpha,\beta$-ethylenic unsaturated monomer mixture, a SP value of the $\alpha,\beta$-ethylenic unsaturated monomer mixture is larger than 12.0 and not larger than 16.0, and a number average molecular weight of the acrylic resin is 15,000 to 50,000, and

the difference ($\Delta$ SP value) between a SP value of the $\alpha,\beta$-ethylenic unsaturated monomer mixture which forms the shell portion and a SP value of the $\alpha,\beta$-ethylenic unsaturated monomer mixture which forms a core portion is 1.0 to 5.0; (amounts of (a) to (d) are on the bases of a resin solid content), and

(e) 0.4 to 2 parts by weight (a weight of a paint resin solid matter is 100 parts by weight) of a flake shape pigment having a long diameter 1 to 10 $\mu$m and a number average particle diameter 2 to 6 $\mu$m.

The present invention will be explained in more detail below.

## BRIEF DESCRIPTION OF THE DRAWINGS

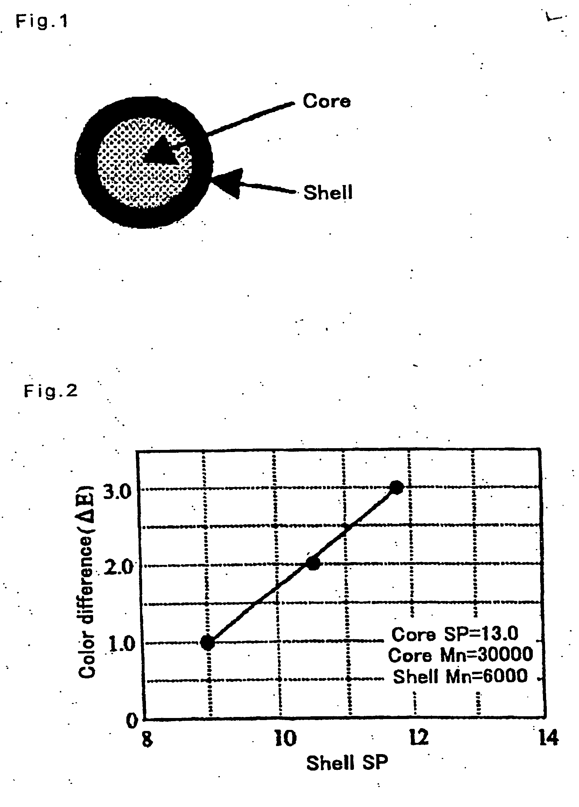

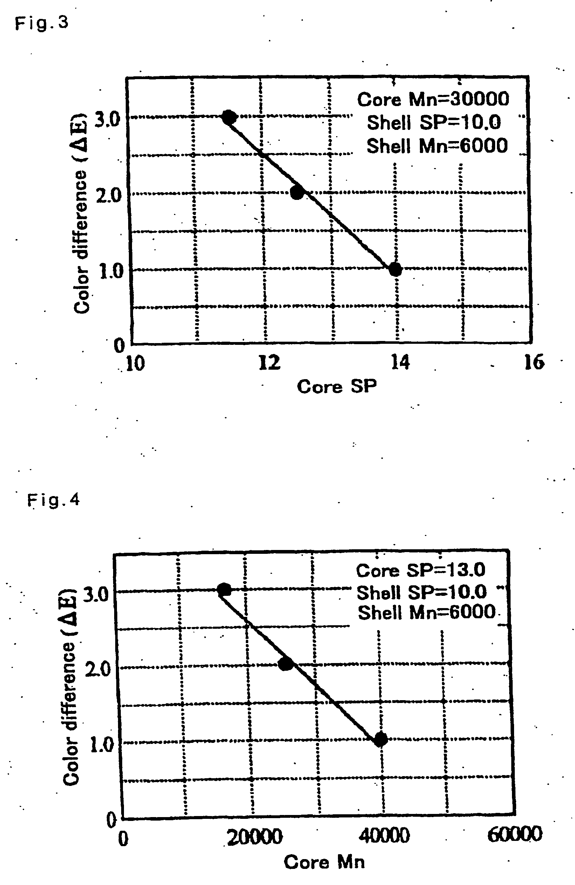

Fig.1 is a cross-sectional view showing schematically a core-shell structure of a non-aqueous dispersion resin (d) having a core-shell structure. Fig.2 is a graph plotting the relationship between a color difference and a SP value at a shell portion. Fig. 3 is a graph plotting the relationship between a color difference and a SP value at a core portion. Fig.4 is a graph plotting the relationship between a color difference and a number average molecular weight at a core part.

## DETAILED DESCRIPTION OF THE INVENTION

Intermediate coating film

In the coating film formation method of the present invention, an intermediate paint is used for forming an intermediate coating film, and the intermediate coating paint contains a urethane-modified polyester resin (a), a melamine resin (b), a blocked isocyanate compound (c), a non-aqueous dispersion resin having a core-shell structure (d), and a flake shape pigment (e). The intermediate paint may further contain organic or inorganic various coloring pigments and extender pigments.

Examples of the urethane-modified polyester resin (a) include those obtained by reacting a hydroxyl group-containing polyester resin and an aliphatic diisocyanate compound, which have a number average molecular weight of 1,500 to 3,000.

A content of the urethane-modified polyester resin (a) is 40 to 56% by weight on a basis of resin solid content. When a content is lower than 40% by weight, the anti-chipping performance is insufficient and, when the content exceeds 56% by weight, a coating film hardness is reduced. A preferable content of the polyester resin (a) is 43 to 50% by weight.

The urethane-modified polyester resin (a) has a number average molecular weight of 1,500 to 3,000, preferably 1,200 to 2,500. When a number average molecular weight is lower than 1,500, workability and curability are not sufficient and, when a number average molecular weight exceeds 3,000, a non-volatile material is too low at coating and workability is conversely deteriorated. Herein, a molecular weight is determined by a GPC method using a styrene polymer as a standard.

The urethane-modified polyester resin has a hydroxyl group value of preferably 30 to 180, more preferably 40 to 160. When the value exceeds the upper limit, water resistance of a coating film is reduced and, when the value is smaller than the lower limit, curability of a coated film is reduced. Preferably, the urethane-modified polyester resin has an acid value of 3 to 30 mgKOH/g, preferably 5 to 25 mgKOH/g. When the value exceeds the upper limit, water resistance of a coating film is reduced and, when the value is smaller than the lower limit, curability of a coating film is reduced.

Generally, a polyester resin can be prepared by polycondensing an acid component, such as polyvalent carboxylic acid and/or acid anhydride, and a polyhydric alcohol, provided that the hydroxyl group-containing polyester resin used in the present invention contains isophthalic acid in the acid component in an amount of 80 mol% or more based on a total mol number of the acid component. When an amount of isophthalic acid in the acid component is smaller than 80 mol%, a glass transition point (Tg) of the hydroxyl group-containing polyester resin is too low.

The hydroxyl group-containing polyester resin has a glass transition point (Tg) of 40 to 80°C, preferably 45 to 75°C. When the glass transition point (Tg) is lower than the lower limit, curability of a coating film is reduced and, when the point is higher than the upper limit, the anti-chipping performance is deteriorated.

Examples of polyvalent carboxylic acid and acid anhydride other than isophthalic acid, are not particularly limited, but include phthalic acid, phthalic anhydride, tetrahydrophthalic acid, tetrahydrophthalic anhydride, hexahydrophthalic acid, hexahydrophthalic anhydride, methyltetrahydrophthalic acid, methyltetrahydrophthalic anhydride, himic anhydride, trimellitic acid, trimellitic anhydride, pyromellitic acid, pyromellitic anhydride, terephthalic acid, maleic acid, maleic anhydride, fumaric acid, itaconic acid, adipic acid, azelaic acid, sebacic acid, succinic acid, succinic anhydride, dodecenylsuccinic acid, dodecenylsuccinic anhydride and the like.

Examples of the polyhydric alcohol are not particularly limited, but include ethylene glycol, diethylene glycol, polyethylene glycol, propylene glycol, dipropylene glycol, polypropylene glycol, neopentyl glycol, 1,2-butanediol, 1,3-butanediol, 1,4-butanediol, 2,3-butanediol, 1,5-pentanediol, 1,6-hexanediol, 1,4-cyclohexanediol, 2,2-dimethyl-3-hydroxypropyl-2,2-dimethyl-3-hydroxypropionate, 2,2,4-trimethyl-1,3-pentanediol, polytetramethylene ether glycol, polycaprolactone polyol, glycerin, sorbitol, annitol, trimethylolethane, trimethylolpropane, trimethylolbutane, hexanetriol, pentaerythritol, dipentaerythritol and the like.

Monocarboxyloc acid, hydroxycarboxylic acid, lactone and the like may be contained as a reaction component, other than the polyvalent carboxylic acid and acid anhydride and the polyhydric alcohol component. In addition, a drying oil, a semi-drying oil and fatty acid thereof may also be contained. Examples thereof include a monoepoxide compound such as Carjula E (manufactured by Shell Chemical Co., Ltd.), and lactones. The lactones can form a graft chain by ring-opening addition to a polyester resin of polyvalent carboxylic acid and polyhydric alcohol. Examples of the lactones include β-propiolactone, dimethylpropiolactone, butyllactone, γ-valerolactone, ε-caprolactone, γ-caprolactone, γ-caryllactone, crotolactone, δ-valerolactone, δ-caprolactone and the like. Inter alia, ε-caprolactone is most preferable.

Examples.of the aliphatic diisocyanate compound include hexamethylene diisocyanate, trimethyl hexamethylene diisocyanate, cyclohexane-1,4-diisocyanate, dicyclohexylmethane-4,4-diisocyanate and methylcyclohexane diisocyanate. It is preferable form a viewpoint from the anti-chipping performance and the weather resistance of a coating film that hexamethylene diisocyanate, and trimethylhexamethylene diisocyanate, as well as buret, isocyanurate and adduct of them are used.

An amount of the melamine resin (b) is 10 to 30% by weight based on a resin solid content. When it is smaller than 10% by weight, curability of a coating film is insufficient and, when it is larger than 30% by weight, a cured film is too hard, and brittle. Preferred is 15 to 25% by weight.

The melamine resin is not particularly limited, but includes a methylated melamine resin, a butylated melamine resin or a methyl-butyl mixed type melamine resin. Examples of the melamine resins are "Cymel-303", "Cymel 254" "U ban 128" and "U ban 20N60" sold by Mitsui Toatsu Co., Ltd., "Sumimar Series" sold by Sumitomo Chemical Co., Ltd.

The blocked isocyanate compound is one that is obtained by reacting a compound having an active methylene group to a polymer of hexamethylene diisocyanate or a nurate thereof. Upon heating, the blocking agent is released to generate an isocyanate group which is reacted with a functional group in the urethane-modified polyester resin to cure. Examples of the compound having an active methylene group include active methylene compounds, such as acetylacetone, ethylacetoacetate and ethylmalonate.

An amount of the blocked isocyanate compound is 15 to 30% by weight, more preferably 17 to 25% by weight based on a resin solid content. When it is outside the range, curing is insufficient.

Examples of the blocked isocyanate compound include active methylene-type blocked isocyanate "Duranate MF-K60X" manufactured Asahi Chemical Industry Co., Ltd.

The non-aqueous dispersion resin (d) having a core-shell structure is an acryl resin having a two-layered structure composed of core-shell as shown in Fig.1. By copolymerizing a copolymerizable polymer in a mixed solution of a dispersion-stable acryl resin and an organic solvent, the acryl resin can be prepared as a non-crosslinked resin particle which is insoluble in the mixed solution. The dispersion-stable acryl resin constitutes a shell portion of a non-aqueous dispersion resin, and a core portion is formed by copolymerization of a polymerizable monomer.

In order to synthesize the dispersion-stable acryl resin and the non-aqueous dispersion, it is preferable to use a polymerizable monomer having a functional group because a non-aqueous dispersion having a functional group can react with the curing agent as described below together with a dispersion-stable acryl resin containing a functional group to form a three dimensionally cross-linked film.

An amount of the non-aqueous dispersion resin (d) is 4 to 15% by weight based on a resin solid content. When the amount is smaller than 4% by weight, total appearance of a coated film is insufficient, and when the amount exceeds 15% by weight, anti-chipping performance is deteriorated. The amount is preferably 5 to 12% by weight.

The dispersion-stable acryl resin is not particularly limited as long as the non-aqueous dispersion can be stably synthesized in an organic solvent. Specifically, acryl acid resins are preferably used which have a hydroxyl group value of 10 to 250, preferably 20 to 180, an acid value of 0 to 100 mgKOH/g, preferably 0 to 50 mgKOH/g, and a number average molecular weight of 1,000 to 20,000. When these values exceed the upper limit, handling property of the resin is deteriorated, and handling of the non-aqueous dispersion itself is reduced. When the values are smaller than the lower limit, the resin is peeled, and stability of a resin is reduced when formulated into a coated film.

A method of synthesizing the dispersion-stable acryl resin is not particularly limited, but preferable examples include a method of obtaining the resin by radical polymerization in the presence of a radical polymerization initiator, and a method of obtaining the resin by a condensation reaction or an addition reaction. A monomer used for obtaining the dispersion-stable acrylic resin can be appropriately selected depending on the property of the resin, and it is preferable to use a monomer having a functional group such as a hydroxyl group and an acid group, such as those explained as a polymerizable monomer used for synthesizing a non-aqueous dispersion as described below. If necessary, monomers having a functional group such as a glycidyl group and/or an isocyanate group may be used.

It is preferred that the dispersion-stable acrylic resin is obtained by copolymerizing an $\alpha,\beta$-ethylenic unsaturated monomer mixture. It is also preferable that the $\alpha,\beta$-ethylenic unsaturated monomer mixture has a SP value of 8.5 to 12.0.

Herein, the SP value is abbreviation of solubility parameter, and is a property value representing an index for intermolecular interaction of liquid molecules. The meaning of SP value is summarized, for example, J. Paint Technology, vol. 142, 176(1970). An SP value of the $\alpha,\beta$-ethylenic unsaturated monomer mixture can be calculated by the equation:

$$SP = SP_1 \times fw_1 + SP_2 \times fw_2 + \dots + SP_n \times fw_n$$

(wherein $SP_1$, $SP_2$, ..., $SP_n$ is a SP value of each monomer, and $fw_1$, $fw_2$, ..., $fw_n$ is a weight fraction of each monomer relative to a total amount of a monomer mixture)

A constitutional ratio of the dispersion-stable acryl resin and the polymerizable monomer can be arbitrarily selected depending on the purpose. For example, a ratio of the dispersion-stable acryl resin is preferably 3 to 80% by weight, more preferably 5 to 60%, and a ratio of the polymerizable monomer is preferably 97 to 20% by weight, more preferably 95 to 40% by weight based on a total of weights of both components. A total concentration of the dispersion-stable acryl resin and the polymerizable monomer in an organic solvent is preferably 30 to 80 % by weight, more preferably 40 to 60 % by weight based on a total weight.

The non-aqueous dispersion can be obtained by polymerizing a radical polymerizable monomer in the presence of dispersion-stable acryl resin. A core portion of a non-aqueous dispersion formed by polymerizing is composed of preferably an acryl resin obtained by copolymerizing an $\alpha,\beta$-ethylenic unsaturated monomer mixture. The acryl resin constituting a core portion has preferably a number average molecular weight of 15,000 to 50,000. A number average molecular weight of an acryl resin constituting a core portion is a value obtained by subtracting a molecular weight distribution of a dispersion-stable acryl resin from a molecular weight distribution of a whole non-aqueous dispersion to obtain a molecular weight distribution of only a core portion, and obtaining a number average of the molecular weight distribution.

Preferably, the $\alpha,\beta$-ethylenic unsaturated monomer mixture constituting an acryl resin of a core portion has a SP value of larger than 12.0 and not larger than 16.0. A difference ($\Delta$ SP value) between a SP value of the $\alpha,\beta$-ethylenic unsaturated monomer mixture forming a shell portion and a SP value of the $\alpha,\beta$-ethylenic unsaturated monomer mixture forming a core portion is 1.0 to 5.0.

The non-aqueous dispersion thus constructed is transferred to the surface of an intermediate coating by the action of a low SP value of a shell portion to exhibit a function of preventing a layer mixture of an intermediate coating film and a base coating film by the action of high viscosity and high SP value of a core portion. When a SP value and a molecular weight of a shell portion and a core portion are outside the range, such function of a non-aqueous dispersion is deteriorated, a layer mixture between intermediate coating film and base coating film occurs and appearance of a coating film is deteriorated.

It is preferable that the non-aqueous dispersion has a hydroxyl group value of 50 to 400, preferably 100 to 300, an acid value of 0 to 200 mgKOH/g, preferably 0 to 50 mgKOH/g, an average particle diameter ($D_{50}$) of 0.05 to 10 $\mu$m, preferably 0.1 to 2 $\mu$m. When the values are below the lower limit, a particle shape can not be maintained and, when the values exceed the upper limit, stability when dispersed into a paint is reduced.

Representative examples of the $\alpha,\beta$-ethylenic unsaturated monomer having a functional group which is used for synthesizing the non aqueous-dispersion are as follows: examples of the monomer having a hydroxyl group include hydroxyethyl (meth)acrylate, hydroxypropyl (meth)acrylate, hydroxybutyl (meth)acrylate, hydroxymethyl methacrylate, allyl alcohol, and an adduct of hydroxyethyl (meth)acrylate and $\epsilon$-caprolactone.

Examples of the monomer having an acidic group include $\alpha,\beta$-ethylenic unsaturated monomers having a carboxyl group or a sulfonic group. Examples of the monomer having a carboxyl group include (meth)acrylic acid, crotonic acid, ethacrylic acid, propylacrylic acid, isopropyl acrylic acid, itaconic acid, maleic anhydride, and fumaric acid. Examples of the $\alpha,\beta$-ethylenic unsaturated monomer having a sulfonic acid include t-butylacrylamidosulfonic acid. When the $\alpha,\beta$-ethylenic unsaturated monomer having an acidic group is used, it is preferable that at least a portion of acidic group is a carboxyl group.

An $\alpha,\beta$-ethylenic unsaturated monomer having functional group includes a glycidyl group-containing unsaturated monomer such as glycidyl (meth)acrylate; or an isocyanate group-containing unsaturated monomer such as m-iso-

propenyl-$\alpha,\alpha$-dimetylbenzyl isocyanate or isocyanatoethyl acrylate.

Examples of other $\alpha,\beta$-ethylenic unsaturated monomer include (meth)acrylic acid alkyl ester such as methyl (meth)acrylate, ethyl (meth)acrylate, isopropyl (meth)acrylate, n-propyl (meth)acrylate, n-butyl (meth)acrylate, t-butyl (meth)acrylate, isobutyl (meth)acrylate, 2-ethylhexyl (meth)acrylate, n-octyl (meth)acrylate, lauryl (meth)acrylate, stearyl (meth)acrylate, and tridecyl (meth)acrylate; an addition reaction products of oil fatty acid and acrylic acid; methacrylic acid ester monomer having an oxirane structure (e.g., addition reaction product of stearic acid and glycidyl methacrylate etc.); addition reaction product of an oxirane compound containing a $C_3$ or higher alkyl group and acrylic acid or methacrylic acid; styrene, $\alpha$-methylstyrene; o-methylstyrene; m-methylstyrene; p-methylstyrene; p-t-butylstyrene; benzyl (meth)acrylate; itaconic acid ester (e.g. dimethyl itaconate); maleic acid ester (e.g. dimethyl maleate); fumaric acid ester (e.g. dimethyl fumarate); acrylonitrile; methacrylonitrile; methylisopropenyl ketone; vinyl acetate; Veoba Monomer (manufactured by Shell Chemical Co., Ltd., trade name); vinyl propionate; vinyl pivalate; ethylene; propylene; butadiene; N,N-dimethylaminoethyl acrylate; N,N-dimethylaminoethyl methacrylate; acrylamide; vinyl pyridine; and the like.

It is preferable that a polymerization reaction for obtaining the non-aqueous dispersion is performed in the presence of a radical polymerization initiator. Examples of the radical polymerization initiator include azo-based initiators, such as 2,2'-azobisisobutyronitrile, and 2,2'-azobis(2,4-dimethylvaleronitrile); peroxide, such as benzoyl peroxide, lauryl peroxide, t-butyl peroctoate; and the like. It is desirable that an amount of the initiators to be used is 0.2 to 10 parts by weight, preferably 0.5 to 5 parts by weight per a total of 100 parts by weight of a polymerizable monomer. It is preferable that a polymerization reaction for obtaining a non-aqueous dispersion in an organic solvent containing a dispersion-stable resin is generally performed in a temperature range of about 60 to 160°C for 1 to 15 hours.

In addition, the non-aqueous dispersion forms particular shape in a paint, but does not form particular shape in a coating film, which is different from a cross-linked polymer fine particle. That is, the non-aqueous dispersion is different from a cross-linking polymer fine particle in that particular shape is changed in a baking process and the dispersion becomes a resin component, because there are no cross-linking bonds in particles.

Further, a resin particle called as NAD (Non Aqueous Dispersion) which is described in Journal of the Japan Society of Color Material, vol.48 (1975), pp.28-34 and is used in a NAD paint, can also be used.

Examples of the flake shape pigment (e) include mica, alumina, talc and silica. It is preferable from a viewpoint of chipping performance to use talc.

A dimension of the flake shape pigment is preferably such that a long diameter is 1 to 10 $\mu$m, and a number average particle diameter is 2 to 6 $\mu$m. When the long diameter is outside the above range, appearance of a coated film is deteriorated, and anti-chipping performance is poor. When a number average particle diameter is outside the range, similarly, appearance of a coated film is deteriorated, and anti-chipping performance is poor.

A content of the flake shape pigment (e) is preferably 0.4 to 2 parts by weight; more preferably 0.5 to 1.5 parts by weight based on a resin solid content in a paint of 100 parts by weight. When the content is outside the range, the adhesiveness with an undercoating film is deteriorated and, therefore, chipping performance is insufficient.

Examples of other resins which can be contained in the paint are not particularly limited, but include an acrylic resin, a polyester resin, an alkyd resin and an epoxy resin, and these may be used alone or in combination of two or more.

Examples of the coloring pigment include an azochelate-based pigment, an insoluble azo-based pigment, a condensed azo-based pigment, a phthalocyanine-based pigment, an indigo pigment, a perinone-based pigment, a perylene-based pigment, a dioxane-based pigment, a quinacridone-based pigment, an isoindolinone-based pigment, a metal complex pigment and the like as an organic base. As an inorganic base, chrome yellow, yellow iron oxide, blood red, carbon black, titanium dioxide and the like can be used. In addition, as an extender pigment, calcium carbonate, barium sulfate, aluminum flake, kaolin and the like can be used.

A gray-based coloring pigment containing carbon black and titanium dioxide as a main pigment is generally used. Further, a coloring pigment having a hue compatible with that of an upper layer coating, and a combination of various pigments may be also used.

In addition, in order to prevent miscibility with a base coating film and maintain coating workability, a rheological agent can be added to the intermediate paint. Examples of the rheological agent include materials which generally exhibit thixotrotic properties, for example, polyamide-based agents such as a swollen dispersion of fatty acid amide, amide fatty acid, phosphate of long chain polyaminoamide and the like, polyethylene-based agents such as a colloidal swollen dispersion of polyethylene oxide and the like, organic bentonite-based agents such as organic acid smectite cray, montmorillonite and the like, inorganic pigments such as aluminum silicate, barium sulfate and the like, flake shape pigments manifesting viscosity depending on a shape of a pigment, a cross-linked resin particle and the like.

A total amount of a solid content of an intermediate paint used in the present invention at applying is 30 to 80% by weight, preferably 35 to 65% by weight. When the amount is outside the range, paint stability is reduced. When the amount exceeds the upper limit, viscosity is too high and appearance of a coating film is deteriorated. When the amount is below the lower limit, viscosity is too low, appearance is poor in miscibility and film uniformity. In addition to the above components, other additives which are usually added to a paint, for example, a surface adjusting agent, an anti-oxidant, an anti-foaming agent and the like may be incorporated in the intermediate paint used in the present invention. An amount of them to be incorporated is within a range known to a person skilled in the art.

A process for preparing a paint composition used in the present invention including the process described below is not particularly limited, but the all processes which are well-known to a person skilled in the art such as kneading and dispersing of a blend of a pigment and the like using a kneader or a roll, or a SG mill, can be used.

Base coating film

The base paint used in the coating film formation methods of the present invention is formed into a topcoating film together with a clear paint. The base paint contains a film forming resin, a curing agent, a coloring pigment and, if necessary, a metallic pigment and the like.

The film forming resin contained in the base paint is not particularly limited, but preferable examples thereof include an acryl resin, a polyester resin, an alkyd resin, an epoxy resin, a urethane resin and the like. These resins can be used alone or in combination of two or more.

The film forming resin can be used by combining with a curing agent. From a viewpoint of the various performances and the cost of the resulting coating film, an amino resin and/or a blocked isocyanate resin are preferably used.

A content of the curing agent is preferably 20 to 60% by weight, more preferably 30 to 50% by weight, based on a weight of a solid content of the film forming resin. When a content is smaller than 20% by weight; curability is insufficient. When a content is higher than 60% by weight, a cured film is too hard, and brittle.

In addition, as the coloring pigment, for example, coloring pigments exemplified for the intermediate paint can be contained.

A shape of metallic pigment optionally contained in the base paint is not particularly limited. The metallic pigment may be colored. For example, a metallic pigment having an average particle diameter ($D_{50}$) of 2 to 50 $\mu$m, and a thickness of 0.1 to 5 $\mu$m is preferable. In addition, a metallic pigment having an average particle diameter in a range of 10 to 35 $\mu$m is excellent in gloss appearance, and is suitably used. The pigment concentration (PWC) of the metallic pigment in the paint is generally 20.0% by weight or less. When the concentration exceeds the upper limit, appearance of a coating film is deteriorated. The concentration is preferably 0.01% to 18.0%, more preferably 0.1% to 15.0%. When a content of the metallic pigment exceeds 20% by weight, appearance of a coating film is deteriorated.

Examples of the metallic pigment include non-colored or colored metallic pigments of metals or alloys such as aluminum, copper, zinc, iron, nickel, tin, aluminum oxide, and a mixture thereof. Further, an interfering mica pigment, a white mica pigment, a graphite and other colored or non-colored flake shape pigments may be used in combination.

The total pigment concentration (PWC) of the metallic pigment and other all pigments in a paint is 0.1 to 50% by weight, preferably 0.5 to 40% by weight, more preferably 1.0 to 30% by weight. When the concentration exceeds the upper limit, appearance of a coating film is deteriorated.

Similar to the intermediate paint, in order to maintain coating workability, it is preferable to add a rheological agent to the base paint. The rheological agent is used for skillfully forming a film having no unevenness and no sagging and, generally, exhibits thixotropic properties. As such an agent, for example, agents exemplified for the intermediate paint can be used.

In addition to the components, additives which are generally added to a paint such as a surface adjusting agent, a thickener, an antioxidant, an ultraviolet inhibitor and an anti-foaming agent may be incorporated into the base paint used in the present invention. An amount of them to be incorporated is within a range known to a person skilled in the art.

An amount of a total solid substance of the base paint used in the present invention at applying is 10 to 60% by weight, preferably 15 to 50% by weight. When the amount is above the upper limit or below the lower limit, stability of a paint is reduced. When the amount exceeds the upper limit, a viscosity is too high, and appearance of a coating film is deteriorated. When the amount is below the lower limit, viscosity is too low, and deteriorated appearance such as miscibility and unevenness occurs.

Clear coating film

For forming the clear coating film; a clear paint is used. The clear paint is not particularly limited but clear paints containing a film forming thermosetting resin and a curing agent can be utilized. As a form of the clear paint, a solution type, an aqueous type and a powder type are exemplified.

From a viewpoint of transparency and resistance to acid rain etching, preferable examples of the solution-type clear paint include a combination of an acryl resin and/or a polyester resin and an amino resin, and an acryl resin and/or a polyester resin having carboxylic acid-epoxy curing system and the like.

In addition, examples of the aqueous type clear paint include paints containing a resin obtained by neutralizing the film forming resin contained in the exemplified solution-type clear paints with a base so that paints become aqueous. The neutralization can be performed by adding tertiary amine such as dimethylethanolamine and triethylamine before or after polymerization.

On the other hand, as the powder-type clear paint, conventional powder paints such as thermoplastic and thermosetting powder paints can be used. Since coating films having the better physical properties are contained, thermosetting powder paints are preferable. Embodiments of the thermosetting powder paints include epoxy-based, acryl-based and polyester-based powder clear paints, but acryl-based powder clear paints having better weather resistance are particularly preferable.

As the powder type clear paint used in the present invention, epoxy-containing acryl resin/polyvalent carboxylic acid-based powder paints are particularly preferable because there is no volatile material at curing, better appearance is obtained and yellowing is scarcely caused.

Further, as in the intermediate paint, in order to keep coating workability, it is preferable that a rheological agent is added to the clear paint. As a rheological agent, agents exhibiting thixotrotic properties can be generally contained. As the agent, for example, agents exemplified for the intermediate paint can be contained. If necessary, a curing catalyst, a surface adjusting agent and the like can be contained.

Substrate

The coating film formation method of the present invention can be advantageously used in various substrates, for example, metal, plastic, foamed materials and the like, in particular, a metal surface and a cast article. The method can be particularly suitably used in metal products which can be cation electrocoated.

Examples of the metal products include iron, copper, aluminum, tin, zinc and the like and alloys containing these metals. Embodiments include vehicle bodies and parts of an automobile, a truck, a motorbike, a bus and the like. It is particularly preferable that the metals are surface-treated with phosphate, chromate or the like in advance.

In addition, in a substrate used in the metallic coating film formation method of the present invention, an electrodeposition coating film may be formed on a chemical-treated steel plate. As an electrodeposition paint for forming an electrodeposition coating film, cation type and anion type may be used, and a cation type electrodeposition paint composition is preferable because it gives a coated film excellent in corrosion resistance.

Coating film formation method

In the coating film formation method of the present invention, successively, an intermediate coating film is formed with an intermediate paint, a base coating film is formed with a base paint, and a clear coating film is formed with a clear paint, on a substrate, in a wet-on-wet manner.

When an automobile body is coated with an intermediate paint in accordance with the present invention, in order to improve the appearance, a film can be formed by a multi-stage coating, preferably 2 stage by air electrostatic spray coating, or a coating method of a combination of air electrostatic spray coating with a rotation atomizing electrostatic coating machine called as "μμ (micro micro) bel", "μ (micro) bel" or "metabel".

A thickness of a dried coating film formed of an intermediate paint in the present invention varies depending on the desired utility. In many cases, a thickness of 10 to 60 μm is useful. When a thickness exceeds the upper limit, the clearness is reduced, disadvantage such as unevenness and sagging occurs at coating in some cases and, when a thickness is below the lower limit, the surface can not be hidden and uneven coating occurs.

In the coating film formation method of the present invention, further, a base paint and a clear paint are coated on an uncured intermediate coating film in a wet-on-wet manner, to form a base coating film and a clear coating film.

A base paint used for forming a base coating film in the method of the present invention can be coated by electrostatic spray coating or with a rotation atomizing electrostatic coating machine such as a metabel, a μμ bel, a μ bel and the like. A dried thickness of the coating film can be set to be 5 to 35 μm, preferably 7 to 25 μm. When a thickness of a base coating film exceeds 35 μm, the clearness is reduced, and unevenness or sagging occurs in some cases. When a thickness is less than 5 μm, the surface hiding property is insufficient and uneven coating (state of discontinuous film) occurs in some cases, both being not preferable.

In the coating film formation method of the present invention, a clear coating film which is coated after formation of the base coating film, when the irregularities resulting from the base coating film and a metallic pigment are contained, is formed for protecting the film by hiding fine projections generated therefrom. As a coating method, it is preferable to form a film with the rotation atomizing electrostatic coating machine, such as a μμ bel, a μ bel and the like.

A dry thickness of a clear coating film formed of the clear paint is preferably around 10 to 80 μm, more preferably about 20 to 60 μm. When a thickness exceeds the upper limit, disadvantage such as popping and sagging occurs at application in some cases. When a thickness is below the lower limit, fine projections of surface can not be hidden.

The thus obtained coated composite films are subjected to coating film formation by simultaneous curing, so-called three-coat one-bake. In this case, a baking and drying oven can be omitted for the intermediate coating film and therefore is preferable from a viewpoint of economical properties and environment suitability.

By setting a curing temperature of the coated composite films at 100 to 180°C, preferably 130 to 160°C, the cured coating film having a high-crosslinking degree is obtained. When a temperature is higher than the upper limit, a coating film is hard and brittle. When a temperature is lower than the lower limit, curing is not sufficient. A curing time varies depending on a curing temperature, and it is suitable to cure at 130 to 160°C for 10 to 30 minutes.

A film thickness of a coated composite film formed in the present invention is generally 30 to 300 $\mu$m, preferably 50 to 250 $\mu$m. When it exceeds the upper limit, film properties such as temperature cycle test and the like are reduced. When it is below the lower limit, strength of a film is reduced.

**EXAMPLES**

The present invention will be explained in detail by way of specific Examples below, but the present invention is not limited by the following Examples. Hereinafter, "part" means "part by weight".

Preparation Example 1

Preparation of urethane-modified Polyester resin

440 Parts of isophthalic acid, 20 parts of hexahydrophthalic acid, 40 parts of azelaic acid, 300 parts of trimethylolpropane and 200 parts of neopentyl glycol were placed into a 2L reaction vessel equipped with a nitrogen introducing tube, a stirrer, a temperature adjuster, an addition funnel and a cooling tube equipped with a decanter and were dissolved by heating with stirring. Into the content, 0.2 part of dibutyl tin oxide was put, stirring was initiated and a temperature of the reaction layer was gradually risen from 180 to 220°C over 3 hours. Produced condensed water was distilled off from the reactor. When a temperature reached 220°C, a temperature was retained for 1 hour, 20 parts of xylene was gradually added to a reaction layer, and a condensation reaction was allowed to proceed in the presence of a solvent. When a resin acid value reached 10 mgKOH/g, the material was cooled to 100°C, and 100 parts of hexamethylene diisocyanate was gradually added over 30 minutes. Further, a temperature was retained for 1 hour, 200 parts of xylene and 200 parts of butyl acetate were added, to obtain a urethane-modified polyester resin having a solid content of 70%, a number average molecular weight of 2,000, an acid value of 8 mgKOH/g, a hydroxyl group value of 120 and resin Tg of 60°C.

Preparation Example 2

Preparation of non-aqueous dispersion

(a) Preparation of dispersion-stable resin

90 Parts of butyl acetate was placed into a vessel equipped with a stirrer, a temperature controller and a refluxing condenser. Then, 20 parts from a monomer mixture having the following composition:

| Table 1 | |
|---|---|
| Methyl methacrylate | 20.0 parts |
| Ethyl methacrylate | 18.9 parts |
| Stearyl methacrylate | 38.8 parts |
| 2-Hydroxyethyl acrylate | 22.3 parts |
| Azobisisobutyronitrile | 5.0 parts |

and having a SP value of 9.0 was added, and a temperature was risen by heating while stirring. 85 Parts of the reminder of the mixed solution was added dropwise at 110°C over 3 hours, and then, a solution of 0.5 part of azobisisobutyronitrile and 10 parts of butyl acetate was added dropwise over 30 minutes. The reaction solution was stirred to reflux for further 2 hours to increase conversion to a resin, and thereafter, the reaction was completed to obtain an acryl resin having a solid content of 50% and a number average molecular weight of 6,000.

(b) Preparation of non-aqueous dispersion

90 Parts of butyl acetate and 60 parts of the acryl resin obtained in the (a) Preparation of a dispersion-stable acryl resin were placed into a vessel equipped with a stirrer, a condenser and a temperature controller. Then, a monomer mixture having the following composition:

Table 2

| Styrene | 2.0 parts |
|---|---|
| Methacrylic acid | 1.8 parts |
| Methyl methacrylate | 17.0 parts |
| Ethyl acrylate | 8.5 parts |
| 2-Hydroxyethyl acrylate | 40.7 parts |
| Azobisisobutyronitrile | 1.4 parts |

and having a SP value of 13.0 was added dropwise at 100°C over 3 hours, and then, a solution of 0.1 part of azobisisobutyronitrile and 1 part of butyl acetate was added dropwise over 30 minutes. Stirring of the reaction solution was further continued for 1 hour, to obtain an emulsion having a solid content of 60% and a particle diameter of 180 nm. This emulsion was diluted with butyl acetate to obtain a core-shell type butyl acetate dispersion having a non-aqueous dispersion content of 40%, a viscosity of 300 cps (25°C) and a particle diameter of 180 nm. This non-aqueous dispersion resin had Tg of 23°C, a hydroxyl group value of 162 and a number average molecular weight of 23,000. Therefore, a number average molecular weight of a core portion was calculated to be 30,000. A difference in SP values of a shell portion and a core portion (Δ SP value) which are a dispersion stable acryl resin was 4.0.

Preparation Examples 3 to 10

Preparation of non-aqueous dispersion

Non-aqueous dispersion resins were obtained in the same manner as that of Preparation Example 2 except that a composition of a monomer mixture used in a shell portion and a monomer mixture used in a core portion was changed as shown in Table 3. The property values of each non-aqueous dispersion are shown in Table 4.

Table 3

| | Composition of monomer mixture (parts by weight) | Preparation of Example | | | | | | | | |
|---|---|---|---|---|---|---|---|---|---|---|
| | | 2 | 3 | 4 | 5 | 6 | 7 | 8 | 9 | 10 |
| Shell portion | Methyl methacrylate | 20.0 | 30.0 | 30.0 | 30.0 | 20.0 | 20.0 | 20.0 | 20.0 | 20.0 |
| | Ethyl methacrylate | 18.9 | 18.9 | 18.9 | 18.9 | 18.9 | 18.9 | 18.9 | 18.9 | 18.9 |
| | Stearyl methacrylate | 38.8 | 28.8 | 0.0 | 18.8 | 28.8 | 28.8 | 28.8 | 28.8 | 28.8 |
| | 2-Hydroxyethyl acrylate | 22.3 | 22.3 | 32.3 | 22.3 | 22.3 | 22.3 | 22.3 | 22.3 | 22.3 |
| | Azobisisobutyronitrile | 5.0 | 5.0 | 5.0 | 5.0 | 5.0 | 5.0 | 5.0 | 5.0 | 5.0 |
| | 2-Ethylhexyl methacrylate | 0.0 | 0.0 | 18.8 | 10.0 | 10.0 | 10.0 | 10.0 | 10.0 | 10.0 |
| Core portion | Styrene | 2.0 | 2.0 | 2.0 | 2.0 | 2.0 | 0.0 | 2.0 | 2.0 | 2.0 |
| | Methacrylic acid | 1.8 | 1.8 | 1.8 | 1.8 | 1.8 | 3.6 | 1.8 | 1.8 | 1.8 |
| | Methyl methacrylate | 17.0 | 17.0 | 17.0 | 17.0 | 17.0 | 15.7 | 17.0 | 17.0 | 17.0 |
| | Ethyl acrylate | 8.5 | 8.5 | 8.5 | 23.5 | 18.5 | 5.0 | 8.5 | 8.5 | 8.5 |
| | 2-Hydroxyethyl acrylate | 40.7 | 40.7 | 40.7 | 25.7 | 30.7 | 45.7 | 40.7 | 40.7 | 40.7 |
| | Azobisisobutyronitrile | 1.4 | 1.4 | 1.4 | 1.4 | 1.4 | 1.4 | 1.4 | 1.4 | 1.4 |

Table 4

| Preparation Example | Shell portion | | Core portion | | Δ SP value |
|---|---|---|---|---|---|
| | SP value | Molecular weight | SP value | Molecular weight | |
| 2 | 9.0 | 6000 | 13.0 | 30000 | 4.0 |
| 3 | 10.5 | 6000 | 13.0 | 30000 | 2.5 |

Table continued

| Preparation Example | Shell portion | | Core portion | | Δ SP value |
|---|---|---|---|---|---|
| | SP value | Molecular weight | SP value | Molecular weight | |
| 4 | 11.8 | 6000 | 13.0 | 30000 | 1.2 |
| 5 | 10.0 | 6000 | 11.6 | 30000 | 1.6 |
| 6 | 10.0 | 6000 | 12.5 | 30000 | 2.5 |
| 7 | 10.0 | 6000 | 14.0 | 30000 | 4.0 |
| 8 | 10.0 | 6000 | 13.0 | 18000 | 3.0 |
| 9 | 10.0 | 6000 | 13.0 | 25000 | 3.0 |
| 10 | 10.0 | 6000 | 13.0 | 40000 | 3.0 |

Example 1

Intermediate paint 1

107 Parts of the urethane-modified polyester resin varnish obtained in the previous Preparation Example 1, 280 parts of CR-97 (titanium oxide manufactured by Ishihara Sangyo Kaisha Ltd.), 13 parts of MA-100 (carbon black pigment manufactured by Mitsubishi Chemical Co., Ltd.), 7 parts of LMS-100 (scaly talc manufactured by Fuji Talc), 47 parts of butyl acetate and 47 parts of xylene were placed into a 1L vessel, the same weight of GB503M (glass beads having a particle diameter of 1.6 mm, available from Potters Industries Inc.) as that of the mixture was added, and dispersed at room temperature for 3 hours using a table type SG mill to obtain a gray pigment paste. A particle size at completion of dispersion with a grind gauge was 5 μm or less. Filtration of glass beads afforded a pigment paste. Using this pigment paste, an intermediate paint was prepared so that the formulation shown in Table 5 was obtained. Further, the paint was diluted to 19 seconds/20°C with a mixed solvent of ethoxyethylpropionate/S-100 (aromatic hydrocarbon solvent manufactured by Exxon) =1/1 using a No. 4 Ford cup. A non-volatile content at application was 49%.

Table 5

| | | Example 1 |
|---|---|---|
| Intermediate coating formulation | Pigment paste | 100 |
| | Polyester resin | 130 |
| | Non-aqueous dispersion | 53 |
| | U ban 128 (melamine resin) | 71 |
| | Duranate MF-K60X (Blocked isocyanate) | 71 |
| Resin solid content ratio | Polyester resin/ non-aqueous dispersion/ melamine resin/ blocked isocyanate | 50/10/20/20 |
| Pigment ratio | Titanium oxide/ carbon black/ talc | 28/1.3/0.7 |
| PWC (%) | | 30 |

Base paint

An acryl melamine-based metallic base paint "Orga TO H600 18J Green Metallic" manufactured by Nippon Paint Co., Ltd. was diluted to 17 seconds/ 20°C with a mixed solvent of ethoxyethyl propionate/S-100 (aromatic hydrocarbon solvent manufactured by Exxon) / toluene = 1/1/2 using a No. 3 Ford cup. A non-volatile fraction of paint at application was 31%. In addition, a non-volatile fraction at deposition was 65%.

Clear paint

An acid epoxy curing-based clear paint "Mack O-1600 Clear" manufactured by Nippon Paint Co., Ltd. was diluted to 26 seconds/ 20°C with a mixed solvent of ethoxyethyl propionate/S-100 (aromatic solvent manufactured by Exxon) = 1/1 using a No. 4 Ford cup. A non-volatile fraction of a paint at application was 50%. In addition, a non-volatile fraction at deposition was 61%.

Coating film formation method

A cationic electrodeposition paint "Power Top V-20" (manufactured by Nippon Paint Co., Ltd.) was electrodeposition-applied on a SPC steel plate having a thickness of 0.8 mm, a length of 30 cm and a width of 10cm which had been treated with zinc phosphate, so that a dry film thickness became 20 $\mu$m, followed by baking at 160°C for 30 minutes, to prepare a coated plate. Then, this was put on a conveyer, the intermediate paint was coated with "microbel" (rotation atomizing type electrostatic coating machine) while moving, so that a dry film thickness became 20 $\mu$m and, after application, setting was performed at intervals of 10 minutes.

Then, the base paint was applied with a "microbel" and a "metabel" at 2 stage so that a dry film thickness became 15 $\mu$m. Between two applications, an interval of 2.5 minutes was taken. After the second application, setting of 8 minutes was performed. Then, the clear paint was coated with a "microbel" at 1 stage so that a dry film thickness became 35 $\mu$m and 7 minutes setting was performed. Then, the resulting coated plate was baked at 140°C for 30 minutes.

Regarding the resulting coated plate, finished appearance of a coated film, in particular, gloss appearance was evaluated with eyes based on the following criteria.

Table 6 Appearance judgment criteria

| ○ | Very good gloss appearance and protuberance |
|---|---|
| × | No gloss appearance |

Then, an extent of layer mixing of a coated film was measured by a color difference between a standard coated plate ($\Delta$E). A standard coated plate was obtained in the same manner as that of Example 1 except that an intermediate coating film was baked, and thereafter, a base coating film and a clear coating film were formed by two-coat one-bake method. Thereupon, regarding an intermediate coating film, after application, 10 minutes setting was performed, and baking was performed at 140°C for 30 minutes. A base coating film and a clear coating film were coated thereon in a wet-on-wet manner, and 10 minutes setting was performed, followed by baking at 140 °C for 30 minutes.

Then, a color difference of a coated plate relative to a standard plate was measured using a color difference measuring machine ("CR-354 color difference meter", manufactured by Konica-Minolta). The results are shown in Table 7.

Examples 2 to 9

An intermediate paint was prepared, a coated plate was obtained, and this was evaluated, in the same manner as that of Example 1 except that a kind of a non-aqueous dispersion resin (resin (d)) was changed as shown in Table 7. The results are shown in Table 7.

In Examples 1 to 3, non-aqueous dispersion resins having different SP values at a shell portion were used. As a result, the lower the SP value at a shell portion, the lower the $\Delta$E value, and layer mixing was improved. Fig.2 is a graph plotting the relationship between both of them.

In Examples 4 to 6, non-aqueous dispersion resins having different SP values at a core portion were used. As a result, the higher the SP value at a core portion, the lower the $\Delta$E value, and layer mixing was improved. Fig.3 is a graph plotting the relationship between both of them.

In Examples 7 to 9, non-aqueous dispersion resins having different number average molecular weights at a core portion were used. As a result, as a number average molecular weight at a core portion was higher, $\Delta$E was lower, and layer mixing was improved. Fig.4 is a graph plotting the relationship between both of them.

Comparative Example

In Comparative Example, the intermediate paint used in Example 1 was not used, but a polyester and melamine-based intermediate paint "Orga to H870 Gray" manufactured by Nippon Paint Co., Ltd. which was a monolayer curing type was used. This intermediate paint was used in a wet-on-wet manner to prepare a coated composite film, which was then evaluated. The results of evaluation are shown in Table 7.

Table 7

| Example | Resin (d) | Appearance | Color difference |
|---|---|---|---|
| 1 | Preparation Example 2 | ○ | 1.0 |
| 2 | Preparation Example 3 | ○ | 2.0 |
| 3 | Preparation Example 4 | ○ | 3.0 |
| 4 | Preparation Example 5 | ○ | 3.0 |
| 5 | Preparation Example 6 | ○ | 2.0 |
| 6 | Preparation Example 7 | ○ | 1.0 |
| 7 | Preparation Example 8 | ○ | 3.0 |
| 8 | Preparation Example 9 | ○ | 2.0 |
| 9 | Preparation Example 10 | ○ | 1.0 |
| Comparative Example | - | × | 10.0 |

In Examples of the present invention, even when an intermediate coating film, a base coating film and a clear coating film were successively formed in a wet-on-wet manner, the coated composite film had excellent gloss appearance. In addition, since coating system performed in the three-coat one-bake system had a fewer baking times as compared with the conventional coating system of three-coat two-bake system, anti-chipping property was inferior in some cases. However, in the present invention, the intermediate coating paint has changed its composition to the claimed one. The use of the new intermediate coating paint imparts both repulsion force against impact force at chipping and capability of converting impact energy to heat energy to the resulting coated composite film. The resulting coated composite film had a small peeling area on appearance and less peeling frequency, even when the film received chipping.

In addition, the present invention has grasped suitable property ranges of the core-shell type acryl resin that, in the beneficial three-coat one-bake coating system, can obtain a color tone equivalent to that obtained by the conventional two-coat one-bake coating system. By the intermediate coating paint to which an appropriate amount of the interface-controlling acryl resin is added, miscibility of an intermediate coating and a base is inhibited and color haze is also prevented.

According to the method of the present invention, miscibility and inversion at the interface between respective coating film layers when an intermediate coating film and a metallic base coating film are successively applied can be controlled, and a coated composite film excellent in film physical properties and appearance can be industrially provided.

## Claims

1.  A method for forming a coated film, which comprises a step of successively coating, on an elecrocoated film formed on a substrate, an intermediate paint, a base paint and a clear paint formed thereon, and a step of baking and curing the coated three-layers at the same time, wherein
said intermediate paint comprises:

    (a) 40 to 56% by weight of a urethane-modified polyester resin having a number average molecular weight of 1,500 to 3,000, obtained by reacting an aliphatic isocyanate compound with a hydroxyl group-containing polyester resin having a glass transition point (Tg) of 40 to 80°C, the polyester being obtained by polycondensation of an acid component containing 80 mol% or more of isophathalic acid and a polyhydric alcohol;
    (b) 10 to 30% by weight of a melamine resin;
    (c) 15 to 30% by weight of an isocyanate compound blocked with a compound having an active methylene group, the isocyanate compound being obtained by reacting hexamethylene diisocyanate, and a compound reacting with hexamethylene diisocyanate;
    (d) 4 to 15% by weight of a non-aqueous dispersion of resin particles having a core-shell structure,
    wherein the shell portion is composed of an acrylic resin obtained by copolymerization of an $\alpha,\beta$-ethylenic unsaturated monomer mixture, a solubility parameter (SP value) of the $\alpha,\beta$-ethylenic unsaturated monomer mixture is not smaller than 8.5 and not larger than 12.0, and the number average molecular weight of the acrylic resin is 1,000 to 20,000,
    the core portion is composed of an acrylic resin obtained by copolymerization of an $\alpha,\beta$-ethylenic unsaturated

monomer mixture, a SP value of the $\alpha,\beta$-ethylenic unsaturated monomer mixture is larger than 12.0 and not larger than 16.0, and the number average molecular weight of the acrylic resin is 15,000 to 50,000, and the difference ($\Delta$ SP value) between the SP value of the $\alpha,\beta$-ethylenic unsaturated monomer mixture which forms the shell portion and a SP value of the $\alpha,\beta$-ethylenic unsaturated monomer mixture which forms the core portion is 1.0 to 5.0; (amounts of (a) to (d) are on the bases of a resin solid content), and

(e) 0.4 to 2 parts by weight (a weight of a paint resin solid matter is 100 parts by weight) of a flake shape pigment having a long diameter 1 to 10 $\mu$m and a number average particle diameter 2 to 6 $\mu$m.

**2.** The coating film forming method according to claim 1, wherein the non-aqueous dispersion resin has a hydroxyl group value of 50 to 400 and an average particle diameter of 0.05 to 10 $\mu$m.

**Revendications**

**1.** Procédé pour former un film appliqué, qui comprend une étape consistant à appliquer successivement, sur un film appliqué électrolytiquement formé sur un substrat, une peinture intermédiaire, une peinture de base et une peinture transparente formée sur celle-ci, et une étape consistant à cuire et durcir en même temps les trois couches appliquées, dans lequel

ladite peinture intermédiaire comprend :

(a) 40 à 56 % en poids d'une résine polyester modifiée par un uréthanne, ayant un poids moléculaire moyen en nombre de 1 500 à 3 000, obtenue en faisant réagir un composé isocyanate aliphatique avec une résine polyester contenant un groupe hydroxyle ayant une température de transition vitreuse (Tg) de 40 à 80 °C, le polyester étant obtenu par polycondensation d'un constituant acide contenant 80 % en moles ou plus d'acide isophtalique et d'un alcool polyhydrique ;

(b) 10 à 30 % en poids d'une résine de mélamine ;

(c) 15 à 30 % en poids d'un composé isocyanate bloqué avec un composé ayant un groupe méthylène actif, le composé isocyanate étant obtenu en faisant réagir du diisocyanate d'hexaméthylène, et un composé réagissant avec du diisocyanate d'hexaméthylène ;

(d) 4 à 15 % en poids d'une dispersion non aqueuse de particules de résine ayant une structure coeur-enveloppe, dans laquelle la partie enveloppe est composée d'une résine acrylique obtenue par copolymérisation d'un mélange de monomères $\alpha,\beta$-éthylénique insaturés, le paramètre de solubilité (valeur SP) du mélange de monomères $\alpha,\beta$-éthyléniquement insaturés n'est pas plus petit que 8,5 et pas plus grand que 12,0, et le poids moléculaire moyen en nombre de la résine acrylique est de 1 000 à 20 000,

la partie coeur est composée d'une résine acrylique obtenue par copolymérisation d'un mélange de monomères $\alpha,\beta$-éthyléniquement insaturés, la valeur SP du mélange de monomères $\alpha,\beta$-éthyléniquement insaturés est plus grande que 12,0 et pas plus grande que 16,0, et le poids moléculaire moyen en nombre de la résine acrylique est de 15 000 à 50 000 et

la différence ($\Delta$ valeur SP) entre la valeur SP du mélange de monomères $\alpha,\beta$-éthyléniquement insaturés qui forme la partie enveloppe et la valeur SP du mélange de monomères $\alpha,\beta$-éthyléniquement insaturés qui forme la partie coeur est de 1,0 à 5,0 ; (les quantités de (a) à (d) sont sur les bases de la teneur en substances solides de la résine) et

(e) 0,4 à 2 parties en poids (le poids de la matière solide de résine de la peinture est de 100 parties en poids) d'un pigment en forme de paillettes ayant un diamètre long de 1 à 10 $\mu$m et un diamètre de particule moyen en nombre de 2 à 6 $\mu$m.

**2.** Procédé de formation d'un film de revêtement selon la revendication 1, dans lequel la résine de la dispersion non aqueuse a une valeur de groupes hydroxy de 50 à 400 et un diamètre moyen de particule de 0,05 à 10 $\mu$m.

**Patentansprüche**

**1.** Verfahren zur Bildung eines beschichteten Filmes, umfassend einen Schritt der aufeinanderfolgenden Beschichtung eines Zwischenanstriches, eines Grundanstriches und eines klaren Anstriches, die darauf gebildet sind, auf einem elektrobeschichteten Film, der auf einem Substrat gebildet ist, und einen Schritt zum gleichzeitigen Backen und Härten der beschichteten drei Schichten, worin der Zwischenanstrich umfasst:

(a) 40 bis 56 Gew.-% eines urethanmodifizierten Esterharzes mit einem Molekulargewicht im Zahlenmittel von 1500 bis 3000, erhalten durch Reaktion einer aliphatischen Isocyanatverbindung mit einem hydroxylgruppenhaltigen Polyesterharz mit einem Glasübergangspunkt (Tg) von 40 bis 80°C, wobei der Polyester durch Polykondensation einer sauren Komponente mit 80 Mol-% oder mehr Isophthalsäure und eines mehrwertigen Alkohols erhalten ist;

(b) 10 bis 30 Gew.-% eines Melaminharzes;

(c) 15 bis 30 Gew.-% einer Isocyanatverbindung, die mit einer Verbindung mit einer aktiven Methylengruppe blockiert ist, wobei die Isocyanatverbindung durch Reaktion von Hexamethylendiisocyanat und einer Verbindung, die mit Hexamethylendiisocyanat reagiert, erhalten ist,

(d) 4 bis 15 Gew.-% einer nicht wässrigen Dispersion aus Harzteilchen mit einer Kern-Hüll-Struktur, worin sich der Hüllbereich aus einem Acrylharz zusammensetzt, erhalten durch Copolymerisation einer $\alpha,\beta$-ethylenisch ungesättigten Monomermischung, der Löslichkeitsparameter (SP-Wert) der $\alpha,\beta$-ethylenisch ungesättigten Monomermischung nicht kleiner als 8,5 und nicht größer als 12,0 ist und das Molekulargewicht im Zahlenmittel des Acrylharzes 1000 bis 20000 ist, wobei sich der Kernbereich aus einem Acrylharz zusammensetzt, erhalten durch Copolymerisation einer $\alpha,\beta$-ethylenisch ungesättigten Monomermischung, der SP-Wert der $\alpha,\beta$-ethylenisch ungesättigten Monomermischung größer als 12,0 und nicht größer als 16,0 ist und das Molekulargewicht im Zahlenmittel des Acrylharzes 15000 bis 50000 ist, und der Unterschied ($\Delta$ SP-Wert) zwischen dem SP-Wert der $\alpha,\beta$-ethylenisch ungesättigten Monomermischung, die den Hüllbereich bildet, und dem SP-Wert der $\alpha,\beta$-ethylenisch ungesättigten Monomermischung, die den Kernbereich bildet, 1,0 bis 5,0 ist; wobei die Mengen von (a) bis (d) auf der Basis des Feststoffharzgehaltes sind, und

0,4 bis 2 Gew.-Teile (Gewicht des Harzfeststoffes des Anstriches ist 100 Gew.-Teile) eines schuppenförmigen Pigmentes mit einem Längendurchmesser von 1 bis 10 $\mu$m und einem Teilchendurchmesser im Zahlenmittel von 2 bis 6 $\mu$m.

2. Beschichtungsfilmgebungsverfahren nach Anspruch 1, worin die nicht wässrige Dispersion des Harzes einen Hydroxylgruppenwert von 50 bis 400 und einen durchschnittlichen Teilchendurchmesser von 0,05 bis 10 $\mu$m aufweist.

Fig.1

Fig.2

Fig.3

Fig.4